# EUROPÄISCHE PATENTSCHRIFT

(11) **EP 2 030 541 B1**
(45) Veröffentlichungstag und Bekanntmachung des Hinweises auf die Patenterteilung: **05.10.2011**
(21) Anmeldenummer: 08161562.7
(22) Anmeldetag: 31.07.2008
(51) Int. Cl.: A47J 36/02, A47J 36/06, B65D 77/32, B65D 81/34

(54) **Einwegverpackung**
Disposable packaging
Emballage à usage unique

(30) Priorität: 30.08.2007 CH 13542007
(43) Veröffentlichungstag der Anmeldung: 04.03.2009
(73) Patentinhaber: Bachmann-Hanser, André, 6045 Meggen (CH)
(72) Erfinder: Bachmann-Hanser, André, 6045 Meggen (CH)
(74) Vertreter: Feldmann, Clarence Paul

(56) Entgegenhaltungen:
- AT-B- 375 818
- DE-A1-102005 057 833
- DE-U1- 29 810 374
- GB-A- 1 072 148
- GB-A- 2 135 627
- US-A- 3 659 585
- US-A- 4 781 304

## Beschreibung

Die vorliegende Erfindung betrifft eine Einwegverpackung zum Verkauf von gar- oder bratfähigen Frischlebensmitteln, insbesondere von Frischfleisch.

Einwegverpackungen, die zum Verkauf von gar- oder bratfähigen Frischlebensmitteln geeignet sind, sind auf dem Markt bekannt. So werden beispielsweise Aluminiumschalen in denen frisches Brät, eventuell unter Beigabe von fein gehacktem Gemüse und Gewürzen, in den Metzgereien angeboten, die der Käufer direkt in den Backofen schieben kann und so auf einfache Weise ein schmackhaftes Gericht aus Frischlebensmitteln mit geringem Arbeitsaufwand erhält, siehe DE 10 2005 057 833.

Es sind auch Kunststoffschalen mit Deckel im Handel, die bereits mit vorgekochten Lebensmitteln gefüllt sind und zum aufwärmen in einen Mikrowellenofen geeignet sind, siehe US 4 781 304. Für Frischlebensmittel ist jedoch dieser Weg kaum brauchbar. Auch bereits gekochte Lebensmittel in Kunststofffolienbeutel, die nachher in einem Heisswasserbad erwärmt werden können, sind bekannt.

Es sind aber praktisch keine Einwegverpackungen bekannt, die zum Garen oder Braten von Frischlebensmitteln ein fertiges Gericht aufnehmen können, beispielsweise bestehend aus Frischfleisch, Gemüsebeigaben sowie Flüssigkeiten, so dass Frischfleisch direkt in einen Bratofen gegeben werden kann.

Im Haushalt sind verbreitet so genannte Römertöpfe vorhanden, die aus einem glasierten Topf mit einem Deckel bestehen, in denen man entsprechend Frischfleisch mit Gemüsebeigabe und Flüssigkeit mit entsprechenden Gewürzen eingibt und die danach für den Gar- oder Bratprozess in den Ofen geschoben werden, siehe US 3 659 585 und GB 1 072 148. Als Einwegverpackung sind diese Römertöpfe ungeeignet, zu teuer und unökologisch.

Bei verschiedenen Naturvölkern und auch bereits zu prähistorischen Zeiten haben Menschen Lebensmittel mit Lehm ummantelt und den gesamten Klumpen in die Glut einer Feuerstelle gegeben und so das Lebensmittel gebraten. Diese Gar- oder Bratmethode führt an sich zu einer langsamen Garung des Kochgutes unter Beibehaltung wesentlicher Nahrungsstoffe. Von dieser uralten Technologie ausgehend schafft die Erfindung eine moderne Einwegverpackung die alle Vorzüge des bekannten Gar- und Bratverfahrens in einem Römertopf beibehält.

Eine derartige Einwegverpackung zeichnet sich dadurch aus, dass die Verpackung aus unglasierter Tonware besteht und die Form eines Gargefässes hat, umfassend einen Topf und einen Deckel, wobei mindestens die Innenseite des Topfes des Gargefässes mit einem Fett- und/oder ölhaltigen Lebensmittel zulässiger Substanz beschichtet ist.

Weitere vorteilhafte Ausgestaltungsformen des Erfindungsgegenstandes ergeben sich aus den abhängigen Ansprüchen und deren Bedeutung und Wirkungsweise werden nachfolgend mit Bezug auf die anliegende Zeichnung erläutert.

In der Zeichnung ist ein bevorzugtes Ausführungsbeispiel des Erfindungsgegenstandes dargestellt und nachfolgend detailliert beschrieben. Es zeigt:
- Figur 1: eine erste Ausführungsform der erfindungsgemässen Einwegverpackung in einem vertikalen Längsschnitt;
- Figur 2: eine zweite Ausführungsform einer Einwegverpackung in einem vertikalen Querschnitt und
- Figur 3: ein Detail der Einwegverpackung in einem Teilschnitt.

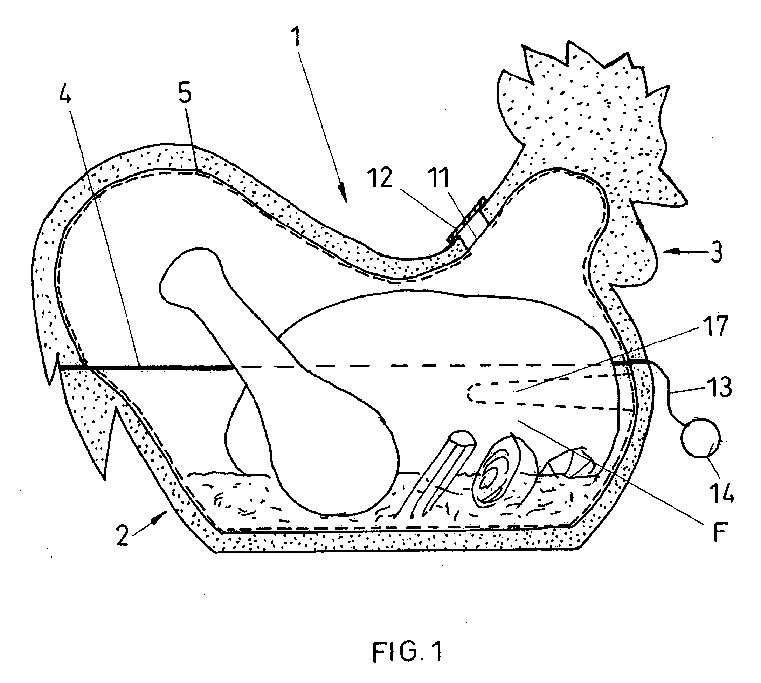

In der Figur 1 ist eine Einwegverpackung 1 zum gar- oder bratfähigen Verkauf von Frischlebensmitteln in einem vertikalen Längsschnitt gezeigt. Das Frischlebensmittel F ist in diesem Falle ein Hähnchen sowie gewisse Gemüsebeigaben und eine Sauce. Um visuell zu verdeutlichen, dass die vorliegende Einwegverpackung 1 ein Hähnchen enthält, ist die Einwegverpackung 1 insgesamt als stilisiertes Hähnchen ausgebildet. Die Einwegverpackung 1 besteht dabei aus einer unglasierten Tonware. Die Tonware hat die Form eines Gargefässes und besteht aus einem Topf 2, welcher den unteren Teil der Einwegverpackung bildet und einen darauf aufgesetzten beziehungsweise aufsetzbaren Deckel 3. Zwischen dem Topf 2 und dem Deckel 3 besteht somit eine Fuge 4. Diese Fuge 4 ist im nicht sichtbaren Bereich Strich liniert weitergezogen. Auf der Innenseite weisen sowohl der Topf 2 als auch der Deckel 3 eine Beschichtung 5 auf, die rein symbolisch strichliniert eingezeichnet ist.

Die Einwegverpackung besteht generell aus einer Keramik- oder Tonware, mit andern Worten, es kommen hierfür sowohl Steingut als auch Porzellan oder Tonware in Frage. Der Begriff Keramik wird hier folglich im Sinne eines Oberbegriffes für derartige Materialien verwendet. Rein aus Kostengründen wird man vermutlich am ehesten Ton für die Fertigung verwenden. Eine solche Einwegverpackung lässt sich sowohl handwerklich sowie auch industriell fertigen. So können die beiden Teile, nämlich der Topf und der Deckel je getrennt gegossen werden, gepresst werden oder spritzgusstechnisch hergestellt werden. All diese Verfahren sind an sich bekannt. Die gefertigten Teile werden danach getrocknet. Bereits im nur getrockneten Zustand lassen sich die Teile als Einwegverpackung verwenden. Die ungebrannte Version weist eine genügende Festigkeit auf, wenn sie genügend getrocknet ist und bildet daher eine besonders preiswerte und ökologisch sinnvolle Version der erfindungsgemässen Einwegverpackung. Hierbei muss ein getrockneter Ton nur relativ trocken sein und nicht wasserfrei, sondern nur formfest.

Während die erste zuvor beschriebene Version zwar getrocknet aber ungebrannt ist, kommt selbstverständlich auch eine Version in Frage, die zwar unglasiert aber gebrannt ist. Solch gebrannte Tonwaren haben eine erhöhte Festigkeit und sind immer noch äusserst preiswert. Diese gebrannte Tonware entspricht einem ersten Brand für Tonwaren die nachher glasiert werden und dann einen zweiten Brand erfahren.

Da die meisten Lebensmittel einen hohen Wassergehalt aufweisen ist es erforderlich, die Einwegverpackung auf der Innenseite mit einer fett- und/oder ölhaltigen Beschichtung 5 aus Lebensmittel zulässigen Substanzen abzudichten. Insbesondere bei ungebrannten Tonwaren ist dies unbedingt erforderlich. Ohne eine solche Beschichtung 5 könnte eine ungebrannte, rein getrocknete Tonware erweichen und die Stabilität nicht mehr gewährleisten. Aber auch bei gebrannter Tonware ist eine solche Beschichtung sinnvoll, damit nicht ein zu hoher Feuchtigkeitsverlust entsteht, da auch eine gebrannte Tonware saugfähig bleibt und somit Feuchtigkeit durch die Wandung hindurch verdunsten kann. Zur Beschichtung eignen sich sowohl pflanzliche als auch tierische Öle, sowie tierische oder pflanzliche Fette. Gegebenenfalls kommen auch öl- oder fetthaltige Lebensmittelzuschlagsstoffe in Frage. Die Verwendung des jeweiligen Öles oder des jeweiligen Fettes kann dabei auf den Inhalt der Einwegverpackung abgestimmt werden.

Während die Einwegverpackung ohne die erforderliche Beschichtung praktisch unbeschränkt lagerfähig ist und auch wenig kontaminationsanfällig, trifft dies nach der Beschichtung mit einem fett- und/oder ölhaltigen Lebensmittel beziehungsweise mit einer als Lebensmittelzuschlagsstoff zulässigen Substanz nur noch bedingt zu. Es wird daher erfindungsgemäss vorgeschlagen, die Einwegverpackung unbeschichtet an den Detailhandel zu liefern, was im vorliegenden Fall insbesondere Metzgereien und Comestiblehandlungen sind sowie Gastronomiebetriebe und das erst dort die erwähnte Beschichtung 5 angebracht wird. Die Anbringung einer solchen Beschichtung erfolgt dann einfach indem man die Wandung mit Butter oder Margarine einstreicht oder mit einem Öl oder geschmolzenem Bratfett bestreicht. Damit ist auch die Anpassung der Beschichtung an den Inhalt in einfachster Weise zu realisieren.

Bei einer solchen Einwegverpackung wird möglichst darauf geachtet, dass der Deckel dichtend auf dem Topf ruht. Dabei ist es sinnvoll den Deckel mit dem Topf zu verkleben. Eine solche Verklebung lässt sich in einfacher Weise dadurch realisieren, dass man ein Mehl-Wasser Gemisch, welches die Festigkeit einer Paste aufweist auf dem Rand aufträgt. Für eine solche Lösung sind keine besonderen Vorkehrungen erforderlich. Als dichtende Klebmasse wird man wiederum ein Lebensmittel verwenden wobei auch eine weiche Tonmasse durchaus in Frage käme.

In einer bevorzugten Ausführungsform weist der Rand des Topfes oder des Deckels eine Rille oder Nut auf, die mit einer solchen dichtenden Klebmasse gefüllt werden kann. Besonders attraktiv ist beispielsweise auch eine relativ gross gestaltete Nut die beispielsweise gerundet ist, sodass die Nut mit Brotteig gefüllt werden kann. Hierzu empfiehlt es sich beispielsweise die Fuge 4 zwischen Deckel 3 und dem Topf 2 so zu gestalten, dass ein innerer Auflagerand verbleibt. Diesem inneren Auflagerand 7 folgt in peripherer Richtung die umlaufende Nut oder Rille 6, die mit Brotteig 8 als Klebmasse gefüllt ist. Weiter nach aussen folgt dann ein äusserer Rand 9, der nicht bis auf die Ebene hinuntergezogen ist in der die Fuge 4 verläuft. Diese Fuge 4 wird somit nur vom inneren Auflagerand 7 gebildet. So verbleibt zwischen dem äusseren Rand 9 des Deckels und dem gegengleichen äusseren Rand 9' ein Spalt 10, durch den ein Teil des Brotteiges 8 nach aussen quillen kann.

Da ungebrannte, beziehungsweise gebrannte Tonware, die nicht glasiert ist, eine komplexe thermische Regelung bewirkt und eine gewisse Verdunstungsabkühlung auftritt, wird der eingefügte Brotteig sehr langsam gebacken werden. Die Gefahr des Verkohlens dieses Brotteiges besteht folglich kaum.

Trotz der Wasserdampfdurchlässigkeit von ungebrannter beziehungsweise gebrannter Tonware würde ein derart mit Klebmasse abgedichtete Einwegverpackung unter Umständen zum Bersten neigen. Entsprechend wird man sinnvollerweise die Einwegverpackung mit einer Überdrucköffnung 11 versehen. Diese Überdrucköffnung 11 wird vorteilhafterweise mit einem Unversehrtheitssiegel 12 abgedeckt. Dieses Unversehrtheitssiegel kann beispielsweise auch als Streifen ausgestaltet sein und sich über die Fuge 4 hinweg erstrecken. Das Unversehrtheitssiegel garantiert dann auch, dass kein Kunde zuvor die Einwegverpackung geöffnet hat um den Inhalt zu inspizieren. Im eher persönlich gehaltenen Detailhandel ist dies jedoch weniger von Bedeutung sondern es kann sogar wünschenswert sein, dass der Metzger seinen Kunden vor dem Verkauf den Inhalt zeigen kann. Wesentlich ist jedoch, dass das Unversehrtheitssiegel 12 die Überdrucköffnung 11 abdichtet um eine eventuelle Kontamination zu verhindern. Das Unversehrtheitssiegel kann beispielsweise ein Papiersiegel sein, welches unter dem herrschenden Innendruck automatisch zerstört wird. Damit ist auch sicher gestellt, dass ohne vorherige Entfernung des Unversehrtheitssiegels 12 die Einwegverpackung nicht zu einem Bersten gebracht werden kann.

Die Verwendung einer Klebmasse 8 im Bereich der Fuge zwischen dem Topf 2 und dem Deckel 3 kann dazu führen, dass sich nach Beendigung des Gar- oder Bratprozesses der Deckel kaum mehr vom Topf lösen lässt. Zwar ist dieses Problem bei der Verwendung beispielsweise von Brotteig kaum gegeben, verwendet man jedoch beispielsweise als Klebmasse Eigelb, so ist die Haftung enorm hoch. Um trotzdem die Einwegverpackung geordnet öffnen zu können, wird vorgeschlagen im Bereich der Fuge 4 beziehungsweise im Bereich des inneren Auflagerandes 7, beispielsweise in einer zusätzlichen Rille einen Aufreissdraht oder eine Aufreissschnur 13 einzulegen, die mit einer Lasche 14 versehen nach aussen geführt ist.

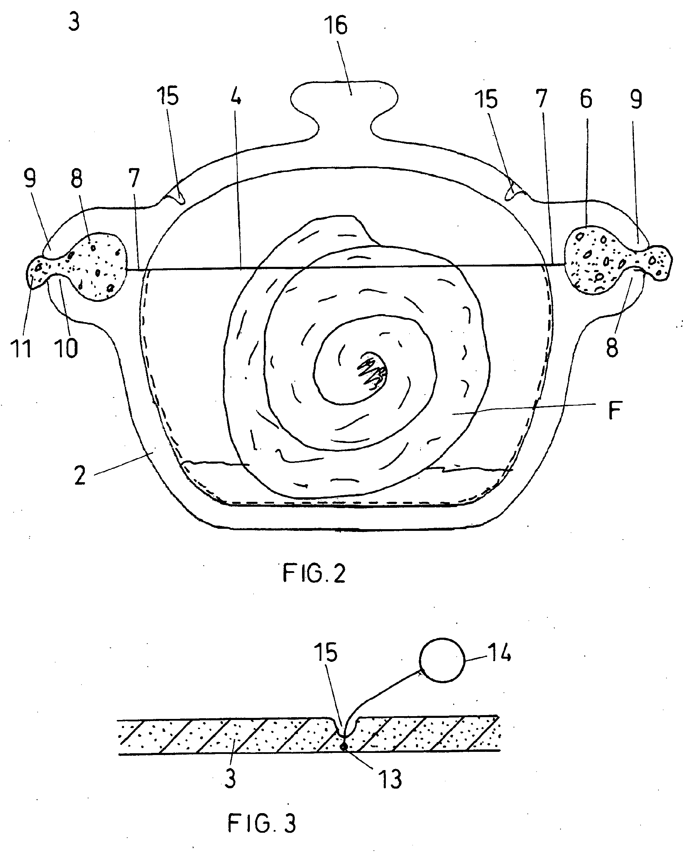

Eine weitere Möglichkeit besteht darin, beispielsweise im Deckel oder Topf mindestens eine Sollbruchnaht 15 einzuformen wie dies in den Figuren 2 und 3 dargestellt ist. Eine solche Sollbruchnaht 15 kann beispielsweise im Deckel umlaufend gestaltet sein, so dass nach Beendigung des Gar- oder Bratprozesses mit einem Schlag auf den Deckel diese Sollbruchnaht zerstört wird und der von der Sollbruchnaht 15 definierte Restbereich des Deckels sich problemlos abheben lässt. Auch bei der Verwendung einer Sollbruchnaht 15 kann wiederum ein Aufreissdraht oder eine Aufreissschnur 13 in diesem Bereich in der Tonware eingebettet sein, wie dies in der Figur 3 dargestellt ist. Auch hier wird man sinnvollerweise die Schnur oder den Draht 13 mit einer Lasche 14 versehen.

Die erfindungsgemässe Einwegverpackung lässt sich praktisch beliebig gestalten. Bevorzugterweise wird man jedoch die Gestaltung so vornehmen, dass die Gestalt einen Hinweis auf den Inhalt der Verpackung ergibt. andererseits kommen aber auch vollkommen herkömmliche Ausgestaltungsformen, wie beispielsweise in der Figur 2 gezeigt, in Frage. Es ist selbstredend, dass auch bei einer Einwegverpackung dieser Art der Deckel beispielsweise mit einem Griff 16 versehen sein kann.

Es ist an sich bekannt, dass man die Garzeit eines Lebensmittels reduzieren kann in dem man Mittel vorsieht, die vom Gargefäss in das Lebensmittel eindringen wie Stäbe bei einem Grill. Bei der Erfindung lässt sich dies realisieren in dem man am Deckel oder am Topf einen einstückig damit verbundenen Zapfen oder Dorn 17 anformt, auf dem das Gargut aufsteckbar ist. Dies ist strichliniert angedeutet.

Letztlich sei auch noch auf die Möglichkeit verwiesen, in den Ton beziehungsweise in die Keramik Gewürze einzuarbeiten, die beim folgenden Garprozess Aromen an den zu garenden Inhalt abgeben. Hierbei wird insbesondere an gemahlene Gewürze wie Pfeffer oder Thymian gedacht, doch auch Gewürzmischungen wie Curry kommen in Frage.

### Bezugszeichenliste:

- 1: Einwegverpackung
- 2: Topf
- 3: Deckel
- 4: Fuge
- 5: Beschichtung
- 6: Nut oder Rille
- 7: innerer Auflagerand
- 8: Klebmasse beziehungsweise Brotteig
- 9: äusserer Rand am Deckel
- 9': äusserer Rand am Topf
- 10: Spalt
- 11: Überdrucköffnung
- 12: Unversehrtheitssiegel
- 13: Aufreissdraht oder Schnur
- 14: Lasche
- 15: Sollbruchnaht
- 16: Griff
- 17: Dorn

## Patentansprüche

1. Einwegverpackung (1) zum Verkauf von gar- oder bratfähigen Frischlebensmitteln, insbesondere Frischfleisch, wobei die Einwegverpackung (1) aus unglasierter Keramik besteht und die Form eines Gargefässes hat, umfassend einen Topf (2) und einen Deckel (3), **dadurch gekennzeichnet, dass** mindestens die Innenseite des Topfes (2) des Gargefässes mit einem fett- und/oder ölhaltigen Lebensmittel beschichtet (5) ist.

2. Einwegverpackung nach Anspruch 1, **dadurch gekennzeichnet, dass** die unglasierte Tonware getrocknet aber ungebrannt ist.

3. Einwegverpackung nach Anspruch 1, **dadurch gekennzeichnet, dass** die unglasierte Tonware gebrannt ist.

4. Einwegverpackung nach Anspruch 1, **dadurch gekennzeichnet, dass** der Deckel (3) oder der Topf (2) eine Überdrucköffnung (11) aufweist.

5. Einwegverpackung nach Anspruch 4, **dadurch gekennzeichnet, dass** die Überdrucköffnung (11) mit einem Unversehrtheitssiegel (12) verschlossen ist.

6. Einwegverpackung nach Anspruch 1, **dadurch gekennzeichnet, dass** zwischen dem Topf (2) und dem Deckel (3) eine dichtende Klebmasse (8) eingefügt ist.

7. Einwegverpackung nach Anspruch 6, **dadurch gekennzeichnet, dass** der Rand des Topfes (2) und/oder des Deckels (3) mit einer Rille oder Nut (6) versehen ist, die zur Aufnahme der Klebmasse (8) geeignet ist.

8. Einwegverpackung nach Anspruch 7, **dadurch gekennzeichnet, dass** der Rand des Topfes (2) und des Deckels (3) je einen inneren Auflagerand (7) aufweisen, wobei im Gebrauchszustand die Auflageränder beider Teile (2, 3) aufeinanderliegen und eine Fuge (4) definieren, und dass in peripherer Richtung nach dem Auflagerand (7) die umlaufende Nut (6) und danach der äussere Rand (9') am jeweiligen Teil folgen, wobei diese äusseren Ränder einen umlaufenden Spalt (10) freilassen aus dem die in der Nut (6) eingebrachte Klebmasse (8) quillen kann.

9. Einwegverpackung nach Anspruch 6, **dadurch gekennzeichnet, dass** die Klebmasse (8) eine aus Lebensmittel bestehender, härtender Paste oder einem härtenden Brotteig besteht.

10. Einwegverpackung nach Anspruch 7, **dadurch gekennzeichnet, dass** im Bereich der Rille oder Nut (6) ein Aufreissdraht oder eine Aufreissschnur (13) eingelegt ist.

11. Einwegverpackung nach Anspruch 1, **dadurch gekennzeichnet, dass** im Deckel (3) und/oder Topf (2) mindestens eine Sollbruchnaht (15) eingeformt ist.

12. Einwegverpackung nach Anspruch 1, **dadurch gekennzeichnet, dass** die Einwegverpackung in einem Giess-, Press- oder Spritzgussverfahren geformt ist und eine Gestaltung aufweist, die auf den Inhalt der Verpackung hinweist.

13. Einwegverpackung nach Anspruch 1, **dadurch gekennzeichnet, dass** in die unglasierte Keramik Gewürze, insbesondere gemahlene Gewürze oder Gewürzmischungen eingearbeitet sind.

14. Einwegverpackung nach Anspruch 1, **dadurch gekennzeichnet, dass** am Topf (2) oder am Deckel (3) ein einstückig damit verbundener Zapfen oder Dorn (17) angeformt ist, auf den das Gargut aufsteckbar ist.

15. Verwendung der Einwegverpackung nach Anspruch 1, **dadurch gekennzeichnet, dass** die Einwegverpackung ohne die innere Beschichtung (15) an den Detailhandel geliefert wird und hier vor dem Füllen der Einwegverpackung diese mit einem fett- und/oder ölhaltigen Lebensmittel beschichtet wird.

## Claims

1. A disposable packaging (1) for the sale of fresh food, which can be cooked or fried, in particular fresh meat, wherein the disposable packaging (1) consists of unglazed ceramics and has the shape of a cooking vessel, comprising a pot (2) and a lid (3), **characterized in that** at least the inner side of the pot (2) of the cooking vessel is coated (5) with a food, which contains fat and/or oil.

2. The disposable packaging according to claim 1, **characterized in that** the unglazed earthenware is dried, but unfired.

3. The disposable packaging according to claim 1, **characterized in that** the unglazed earthenware is fired.

4. The disposable packaging according to claim 1, **characterized in that** the lid (3) or the pot (2) encompasses an overpressure opening (11).

5. The disposable packaging according to claim 4, **characterized in that** the overpressure opening (11) is closed by means of a tamper-proof seal (12).

6. The disposable packaging according to claim 1, **characterized in that** a sealing adhesive composition (8) is inserted between the pot (2) and the lid (3).

7. The disposable packaging according to claim 6, **characterized in that** the edge of the pot (2) and/or of the lid (3) is provided with a notch or a groove (6), which is suitable for accommodating the adhesive compound (8).

8. The disposable packaging according to claim 7, **characterized in that** the edge of the pot (2) and of the lid (3) in each case encompass an inner support edge (7), wherein the supports edges of both parts (2, 3) are located on top of one another and define a joint (4) when in use and **in that** the revolving groove (6) and thereafter the outer edge (9') follow on the respective part in peripheral direction downstream from the support edge (7), wherein these outer edges leave open a revolving gap (10), out of which the adhesive compound (8), which is introduced in the groove (6), can pour.

9. The disposable packaging according to claim 6, **characterized in that** the adhesive compound (8) consists of a hardening paste, which consists of food, or of a hardened bread dough.

10. The disposable packaging according to claim 7, **characterized in that** a tear wire or a tear string (13) is inserted in the area of the notch or groove (6).

11. The disposable packaging according to claim 1, **characterized in that** at least one tear seam (15) is molded in the lid (3) and/or pot (2).

12. The disposable packaging according to claim 1, **characterized in that** the disposable packaging is formed in a casting, pressing or injection molding process and encompasses a design, which points to the content of the packaging.

13. The disposable packaging according to claim 1, **characterized in that** spices, in particular ground spices or spice mixtures are incorporated into the unglazed ceramics.

14. The disposable packaging according to claim 1, **characterized in that** a pin or bolt (17), which is connected to the pot (2) or the lid (3) in one piece and onto which the food, which is being cooked, can be attached, is integrally molded on said pot (2) or the lid (3).

15. A use of the disposable packaging according to claim 1, **characterized in that** the packaging is supplied to the retail business without the inner coating (15) and **in that** the disposable packaging is coated here with a grease and/or oil-containing food prior to the filling of the disposable package.

## Revendications

1. Emballage jetable (1) pour la vente de produits alimentaires frais à cuire ou à rôtir, notamment de viande fraîche, l'emballage jetable (1) consistant dans de la céramique non émaillée et présentant la forme du récipient de cuisson, comprenant un faitout (2) et un couvercle (3), **caractérisé en ce que** la face intérieure du faitout (2) du récipient de cuisson est revêtue (5) d'un produit alimentaire contenant de la graisse et/ou de l'huile.

2. Emballage jetable selon la revendication 1, **caractérisé en ce que** le produit argileux non émaillé est séché mais non cuit.

3. Emballage jetable selon la revendication 1, **caractérisé en ce que** le produit argileux non émaillé est cuit.

4. Emballage jetable selon la revendication 1, **caractérisé en ce que** le couvercle (3) ou le faitout (2) comporte une ouverture de surpression (11).

5. Emballage jetable selon la revendication 4, **caractérisé en ce que** l'ouverture de surpression (11) est fermée par un sceau d'intégrité (12).

6. Emballage jetable selon la revendication 1, **caractérisé en ce qu'**entre le faitout (2) et le couvercle est insérée une masse adhésive (8) assurant l'étanchéité.

7. Emballage jetable selon la revendication 6, **caractérisé en ce que** le bord du faitout (2) et/ou du couvercle (3) est muni d'une cannelure ou rainure (6) qui est adaptée pour recevoir la masse adhésive (8).

8. Emballage jetable selon la revendication 7, **caractérisé en ce que** le bord du faitout (2) et celui du couvercle (3) comportent chacun un bord d'appui (7) intérieur, dans l'état d'utilisation, les bords d'appui des deux pièces (2, 3) étant superposés et définissant une jointure (4) et **en ce que** dans la direction périphérique, la rainure périphérique (6) et ensuite le bord extérieur (9') font suite au bord d'appui (7) sur la pièce concernée, lesdits bords extérieurs laissant libre un interstice périphérique (10) hors duquel la masse adhésive (8) introduite dans la rainure (6) peut s'écouler.

9. Emballage jetable selon la revendication 6, **caractérisé en ce que** la masse adhésive (8) consiste dans une pâte durcissable ou dans une pâte à pain durcissable en produit alimentaire.

10. Emballage jetable selon la revendication 7, **caractérisé en ce que** dans la région de la cannelure ou rainure (6) est inséré un fil métallique de déchirure ou un cordon de déchirure (13).

11. Emballage jetable selon la revendication 1, **caractérisé en ce qu'**au moins une soudure de rupture théorique (15) est façonnée dans le couvercle (3) et/ou dans le faitout (2).

12. Emballage jetable selon la revendication 1, **caractérisé en ce que** l'emballage jetable est façonné par processus de coulée, de moulage par pression ou de moulage par injection et présente une conformation évoquant le contenu de l'emballage.

13. Emballage jetable selon la revendication 1, **caractérisé en ce que** des épices, notamment des épices moulues ou des mélanges d'épices sont incorporés dans la céramique non émaillée.

14. Emballage jetable selon la revendication 1, **caractérisé en ce que** sur le faitout (2) ou sur le couvercle (3) est rapporté un tourillon ou mandrin (17) relié en monobloc avec ce dernier, sur lequel le produit à cuire peut être embroché.

15. Utilisation de l'emballage jetable selon la revendication 1, **caractérisée en ce que** l'emballage jetable est livré dans le commerce de détail sans le revêtement intérieur (15) et **en ce que** c'est ici, avant le remplissage de l'emballage jetable, que l'on revêt ce dernier d'un produit alimentaire contenant de la graisse et/ou de l'huile.
